# EUROPEAN PATENT APPLICATION

(11) **EP 4 629 314 A1**
(43) Date of publication of application: **08.10.2025**
(21) Application number: 23897834.0
(22) Date of filing: 29.11.2023
(51) Int. Cl.: H01M 4/131, H01M 4/62, H01M 4/505, H01M 4/525

(54) **ELECTRODE MIXTURE, AND ELECTRODE AND BATTERY HAVING SAME**

(30) Priority: 30.11.2022 JP 2022192238
(71) Applicant: Mitsui Mining & Smelting Co., Ltd., Shinagawa-ku Tokyo 141-8584 (JP)
(72) Inventor: INOUE, Daisuke, Ageo-shi, Saitama 362-0021 (JP); CHIKUMOTO, Takashi, Ageo-shi, Saitama 362-0021 (JP)
(74) Representative: Novagraaf Technologies
(86) International application number: PCT/JP2023/042755
(87) International publication number: WO 2024/117188

(57) **Abstract**

An electrode mixture including an active material and a solid electrolyte and exhibiting at least two peaks in a volume particle size distribution measured by laser diffraction particle size distribution analysis. **In** the volume particle size distribution, at least two peaks are preferably in the particle diameter range from 0.2 to 20 µm, and it is preferable that the peak top of the frequency peak at the smallest particle diameter, among the at least two peaks, be in a particle diameter range from 0.2 to 5.0 µm, and at the same time, that the peak top of the frequency peak at the largest particle diameter be in a particle diameter range from 2.0 to 20 µm.

## Description

### Technical Field

This invention relates to an electrode mixture, an electrode having the electrode mixture, and a battery having the electrode mixture.

### Background Art

Solid-state batteries, which do not include flammable organic solvents, offer advantages, such as simplification of safety equipment, lower production costs, and higher productivity. Additionally, higher voltages can be achieved by stacking multiple electrodes in series within a single cell.

Patent literature 1 below discloses a solid-state battery including a positive electrode mixture layer containing a positive electrode active material, a negative electrode mixture layer containing a negative electrode active material, and a solid electrolyte layer disposed between the positive and the negative electrode mixture layers in the stacking direction. The solid electrolyte material in this solid-state battery has a bimodal particle size distribution.

### Citation List

### Patent Literature

Patent literature 1: JP 2019-212431A

### Summary of Invention

While the conventional solid-state batteries have the advantages described above, they have a problem in that the density of each electrode (hereinafter referred to as "electrode density") is low due to the need for a solid electrolyte to exist together with the active material in the electrode. The low electrode density results in low energy density of solid-state batteries. Therefore, in order to develop a solid-state battery with a higher energy density, it is necessary to improve the electrode density of each electrode.

Accordingly, an object of the invention is to provide an electrode mixture having a higher electrode density.

The invention provides an electrode mixture including an active material and a solid electrolyte and exhibiting at least two peaks in its volume particle size distribution measured by laser diffraction particle size distribution analysis.

### Brief Description of Drawing

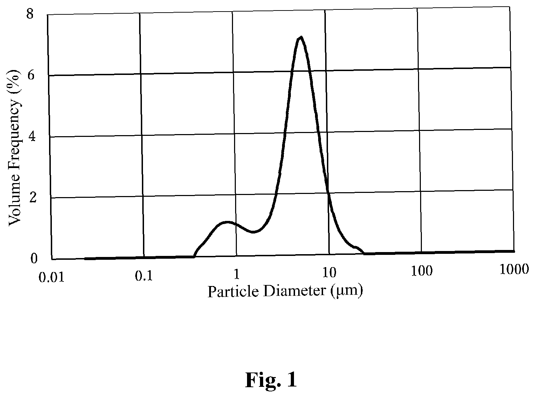

[Fig. 1] Fig. 1 is a volume particle size distribution of the electrode mixture of Example 1 measured by laser diffraction particle size distribution analysis.

### Description of Embodiments

The invention will be described on the basis of its preferred embodiments. The invention relates to an electrode mixture including an active material and a solid electrolyte.

The electrode mixture of the invention preferably exhibits at least two peaks in its volume particle size distribution measured by laser diffraction particle size distribution analysis. It is particularly preferred for the electrode mixture of the invention to exhibit two peaks in the volume particle size distribution. The term "volume particle size distribution" used here refers to a volume particle size distribution of the entire electrode mixture powder including an active material, a solid electrolyte and other optional solid materials.

When the electrode mixture exhibits at least two peaks in the volume particle size distribution, the gaps between relatively large diameter particles are filled with relatively small diameter particles thereby to bring about the effect of increasing the electrode density of the electrode mixture.

In the particle size distribution of the electrode mixture of the invention, the peak tops of at least two peaks are preferably located within a particle diameter range from 0.2 to 20 µm. It is more preferable that the peak top of the frequency peak at the smallest particle diameter, among the at least two peaks, be in a particle diameter range from 0.2 to 5.0 µm (hereinafter, also referred to as "range I"), and at the same time, that the peak top of the frequency peak at the largest particle diameter, among the at least two peaks, be in a particle diameter range from 2.0 to 20 µm (hereinafter, also referred to as "range II"). Exhibiting a peak with its peak top in the range II is advantageous in that the density of the particles increases to thereby increase the electrode density. In addition to this, exhibiting a peak with its peak top in the range I results in that the particles in the range I easily fill the gaps between the particles in the range II, which also leads to a further increase in the electrode density.

When three or more peaks are exhibited in the volume particle size distribution, the range II may be the next largest value range after the range I, or one or more peaks may be exhibited between the range I and the range II.

With a view to further increasing the above effect, it is preferred to control the ratio of the content of relatively large diameter particles to that of relatively small diameter particles within a given range. Specifically, the ratio of the height of the peak at the largest particle diameter (peak A) to the height of the peak at the next largest particle diameter after peak A (peak B) is preferably 1.0 or higher, more preferably 1.2 or higher, even more preferably 1.4 or higher and preferably 10 or lower, more preferably 8 or lower, even more preferably 7 or lower.

When the height ratio of the peak A to the peak B is 10 or lower, relatively small diameter particles sufficiently fill the gaps between relatively large diameter particles. When the height ratio of the peak A to the peak B is 1.0 or higher, particles with relatively small diameters but not small enough to enter the gaps between relatively large diameter particles are present in a controlled amount, and as a result, the electrode density of the electrode mixture increases.

With the view of effectively filling the gaps between relatively large diameter particles with relatively small diameter particles to increase the electrode density, it is preferred that the ratio D_{B}/D_{A}, wherein D_{A} is the particle diameter at the peak top of the peak A and D_{B} is the particle diameter at the peak top of the peak B, be 0.05 to 0.5, more preferably 0.07 to 0.4, even more preferably 0.1 to 0.3.

For the same purpose, D_{B} is preferably 0.1 µm or more, more preferably 0.5 µm or more, even more preferably 0.8 µm or more, and preferably 5.0 µm or less, more preferably 4.0 µm or less, even more preferably 3.0 µm or less, provided that the D_{B}/D_{A} is within the preferred ratio recited above.

With the view of minimizing the gaps between the particles in the electrode mixture to improve the electrode density, it is preferred that at least one of the active material and the solid electrolyte of the electrode mixture of the present invention exhibits at least one peak in the volume particle size distribution thereof when the active material and the solid electrolyte are individually subjected to laser diffraction particle size distribution analysis. For example, there may be one peak or two peaks.

The electrode mixture of the invention preferably has a 50% cumulative volume diameter (the diameter at 50% cumulative volume) D_{EM50}, in laser diffraction particle size distribution analysis, of 1 µm or greater, more preferably 2 µm or greater, even more preferably 3 µm or greater, and preferably 20 µm or smaller, more preferably 17 µm or smaller, even more preferably 15 µm or smaller. When the D_{EM50} is in the above range, the particle size is sufficiently small compared with the electrode thickness, so that the electrode density and the uniformity and smoothness of the electrode are all improved.

The electrode mixture of the invention preferably has a BET specific surface area of 0.5 m²/g or more, more preferably 0.7 m²/g or more, even more preferably 1.0 m²/g or more, and preferably 5.0 m²/g or less, more preferably 3.0 m²/g or less, even more preferably 2.5 m²/g or less.

When the BET specific surface area of the electrode mixture is within the above range, relatively small diameter particles are brought into sufficient contact in the gaps between relatively large diameter particles, and excessive contacts between relatively small and large diameter particles are suppressed, thereby increasing the electrode density of the electrode mixture.

The BET specific surface area can be measured by the single point BET method.

The BET specific surface area of the electrode mixture can be controlled within the above range by, for example, adjusting the BET specific surface area of the active material and/or the solid electrolyte.

The electrode mixture of the invention can be applied to, for example, a current collector to make an electrode, i.e., a positive electrode or a negative electrode. Specifically, the electrode mixture is mixed with a solvent, and the resulting coating composition is applied to the surface of a current collector, such as aluminum foil, dried, and roll-pressed to form an electrode on the current collector. The solvent used to prepare the coating composition is selected from those commonly used in the art without limitation.

When an electrode mixture is pressed, the solid electrolyte particles are crushed to fill the gaps between particles constituting the electrode mixture, and on the other hand, the active material particles are displaced, rather than crushed, by pressing. As a result, the gaps between the electrode mixture particles decrease, thereby increasing the electrode density and the contact area between the active material and the solid electrolyte. Herein, the term "electrode mixture" shall encompass both the one before pressing and the one after pressing, unless otherwise stated.

When the amount of the gaps between the particles constituting the electrode mixture before pressing is small, pressing will more effectively reduce the gaps between the particles. The electrode mixture of the invention is composed of the relatively large diameter particles and the relatively small diameter particles, with the relatively small diameter particles filling the gaps between the relatively large diameter particles, and accordingly, the gaps between the particles in the electrode mixture before pressing are already reduced. Therefore, the gaps between the particles in the electrode mixture are further reduced by pressing, whereby the electrode mixture after pressing has a high electrode density and an increased contact area between the active material and the solid electrolyte.

The electrode formed of the electrode mixture of the invention, which has a high electrode density, provides a battery with an increased energy density.

The active material and the solid electrolyte included in the electrode mixture of the invention will then be described.

The active material contributes primarily to electrode reaction in the electrode mixture of the invention. The active material suitably used in the invention is a positive electrode active material.

The active material suitably used is a complex oxide composed of lithium, oxygen, and at least one of manganese, nickel, cobalt, iron, sodium, magnesium, aluminum, phosphorus, potassium, calcium, titanium, vanadium, chromium, copper, gallium, yttrium, zirconium, niobium, molybdenum, indium, tantalum, tungsten, rhenium, and cerium. The complex oxide is preferably a particulate lithium metal complex oxide having a spinel crystal structure or a layered rock-salt crystal structure in view of further improving the performances of batteries including the electrode mixture of the invention.

When the active material contains a spinel type complex oxide, it preferably contains Mn, in addition to Li and O, and may also contain other elements. Examples of the other elements include Ni, Co, Fe, or any combination of two or more thereof (hereinafter referred to as an element M1). Examples of still other elements include Na, Mg, Al, P, K, Ca, Ti, V, Cr, Cu, Ga, Y, Zr, Nb, Mo, In, Ta, W, Re, Ce, and any combination of two or more thereof (hereinafter referred to as an element M2). Either one of, or both of, the elements M1 and M2 may be used.

Examples of the spinel type complex oxide for the active material include spinel type lithium-manganese complex oxides derived from a crystal structure LiMn₂O_{4-δ} by substituting part of the Mn sites with Li, M1, and M2.

Preferably, the element M1 is a substituting element that mainly contributes to achieving an operating potential of 4.5 V or higher relative to the metallic lithium reference potential. The element M1 preferably includes at least one of Ni, Co, and Fe as stated above and particularly preferably includes at least one of Ni and Co.

The element M2 is preferably a substituting element that mainly contributes to stabilizing the crystal structure thereby to enhance battery characteristics. The element M2 is different from the element M1.

Whether a complex oxide has a spinel crystal structure can be determined, for example, by fitting it to a cubic crystal structure model with the space group Fd-3m (Origin Choice 2). If the agreement indices Rwp and S, which indicate the match between the found intensity and the calculated intensity, satisfy Rwp < 10 or S < 2.5, the complex oxide is classified as one having a spinel crystal structure.

Examples of the lithium metal complex oxide having a layered rock-salt crystal structure for the active material include those represented by the following formula (1): Li₁₊ₓM₁₋ₓO₂. When the lithium metal complex oxide of the formula (1) is used, batteries including the electrode mixture of the invention exhibits further improved characteristics.

M in the formula (1) represents: (i) at least one of Ni, Co, Mn, and Al; or (ii) a combination of at least one of Ni, Co, Mn, and Al with at least one of transition metals of the groups 3 to 11 of the periodic table and typical metals of the second to fourth periods of the periodic table.

In the formula (1), x is preferably -0.05 or greater, more preferably -0.03 or greater, even more preferably 0 or greater, and preferably 0.09 or smaller, more preferably 0.07 or smaller, even more preferably 0.05 or smaller.

In the formula (1), "1+x" is preferably 0.95 or greater, more preferably 0.97 or greater, even more preferably 0.98 or greater, and preferably 1.09 or smaller, more preferably 1.07 or smaller, even more preferably 1.05 or smaller.

The transition metal elements of the groups 3 to 11 of the periodic table and the typical metal elements of the second to fourth periods of the periodic table include Al, P, V, Fe, Ti, Mg, Cr, Ga, Cu, Zn, Nb, Zr, Mo, W, Ta, and Re. Thus, the element M is preferably at least one of Ni, Co, Mn, and Al or a combination of at least one of Ni, Co, Mn, and Al with at least one of P, V, Fe, Ti, Mg, Cr, Ga, Cu, Zn, Nb, Zr, Mo, W, Ta, and Re.

M in the formula (1) preferably contains three elements Mn, Co, and Ni. For example, M can be three of Mn, Co, and Ni or a combination of these three elements and at least one other element.

When M in the formula (1) contains three elements: Mn, Co, and Ni, the molar ratio of Mn, Co, and Ni, Mn:Co:Ni, is preferably 0.01-0.45: 0.01-0.40: 0.30-0.95, more preferably 0.05-0.40: 0.03-0.40: 0.03-0.85, even more preferably 0.05-0.40: 0.03-0.40: 0.30-0.80.

The oxygen atomic ratio in the formula (1) is set to 2 for the sake of convenience, but may have some non-stoichiometry. Namely, the oxygen atomic ratio may be 2 - δ. "Minus δ" indicates oxygen deficiency, and δ is preferably 0 or greater, or 0.2 or smaller, more preferably 0.1 or smaller, even more preferably 0.05 or smaller.

Whether a lithium metal complex oxide has a layered rock-salt crystal structure can be determined, for example, by fitting it to a hexagonal crystal structure model with the space group R-3m. If the agreement indices Rwp and S, which indicate the match between the found intensity and the calculated intensity, satisfy Rwp < 10 or S < 2.5, the complex oxide is classified as one having a layered rock-salt crystal structure.

The active material preferably has a 50% cumulative volume diameter D_{AM50}, in laser diffraction particle size distribution analysis, of 1 µm or greater, more preferably 2 µm or greater, even more preferably 3 µm or greater, and preferably 20 µm or smaller, more preferably 17 µm or smaller, even more preferably 15 µm or smaller. When the D_{AM50} is 20 µm or smaller, a good contact is provided between the active material and the solid electrolyte in the electrode mixture, thereby forming a uniform electrode layer. When the D_{AM50} is 1 µm or greater, a good contact is provided between the active material and the solid electrolyte in the electrode mixture, thereby increasing the electrode density.

The active material preferably has a BET specific surface area of 0.1 m²/g or more, more preferably 0.15 m²/g or more, even more preferably 0.2 m²/g or more, and preferably 1.5 m²/g or less, more preferably 1.3 m²/g or less, even more preferably 1.0 m²/g or less.

When the BET specific surface area of the active material is in the above range, the contact area between the active material and the solid electrolyte is sufficient while suppressing excessive contact between them, thereby increasing the electrode density of the electrode mixture.

The BET specific surface area can be measured by the method described above.

The active material preferably has a tap density of 1.0 g/cm³ or more, more preferably 1.3 g/cm³ or more, even more preferably 1.5 g/cm³ or more, and preferably 3.0 g/cm³ or less, more preferably 2.9 g/cm³ or less, even more preferably 2.8 g/cm³ or less. When the tap density of the active material is in the above range, the minimum electrode density necessary for a battery is ensured despite the presence of the solid electrolyte in the electrode mixture.

The tap density can be measured in accordance with JIS Z 2512 using a JV2000 tap density tester available from Copley Scientific Ltd. Specifically, 10 g of an active material is placed in a graduated cylinder of 25 cm³ capacity, and the cylinder is tapped 2500 times at a rate of 250 taps per minute with a stroke length of 3 mm, followed by obtaining the tap density.

In view of sufficiently increasing the electrode density, the active material content of the electrode mixture of the invention is preferably at least 60 mass%, more preferably 70 mass% or higher, even more preferably 85 mass% or higher. The active material content may be, for example, 99 mass% or lower, 98 mass% or lower, or 95 mass% or lower.

The solid electrolyte used in the invention will next be described.

The solid electrolyte used in the invention can be the same as those used in common solid-state batteries, including sulfide solid electrolytes, oxide solid electrolytes, nitride solid electrolytes, and halide solid electrolytes. Among them, sulfide solid electrolytes, which contain a sulfur element, are preferred because of their high ionic conductivity. In addition, sulfide solid electrolytes are advantageously more crushable by pressing than other Li-ion conductive solid electrolytes, so that a resulting electrode mixture tends to have an increased electrode density.

The sulfide solid electrolyte used in the invention may contain lithium and sulfur and have Li-ion conductivity, or may contain lithium, phosphorus, and sulfur and have Li-ion conductivity.

The sulfide solid electrolyte may have a crystal phase with an argyrodite crystal structure.

Examples of the sulfide solid electrolyte include Li₂S-P₂S₅, Li₂S-P₂S₅-LiX (wherein X represents at least one halogen element), Li₂S-P₂S₅-P₂O₅, Li₂S-Li₃PO₄-P₂S₅, Li₃PS₄, Li₄P₂S₆, Li₁₀GeP₂S₁₂, Li_{3.25}Ge_{0.25}P_{0.75}S₄, Li₇P₃S₁₁, Li_{3.25}P_{0.95}S₄, and Li₇₋ₓPS₆₋ₓXₓ (a solid electrolyte having a crystal phase with an argyrodite crystal structure; wherein X represents at least one halogen element; 0.2 < x <2.0 or 0.2 < x < 1.8).

With the view of improving the electrode density of the electrode mixture, it is preferred to minimize the gaps between the particles composing the electrode mixture. With this view, the solid electrolyte preferably has a 50% cumulative volume diameter D_{SE50}, in laser diffraction particle size distribution analysis, of 0.1 µm or greater, more preferably 0.3 µm or greater, even more preferably 0.5 µm or greater, and preferably 15 µm or smaller, more preferably 10 µm or smaller, even more preferably 5 µm or smaller. When the D_{SE50} is not more than the above upper limit, the solid electrolyte easily enters the gaps between active material particles to effectively reduce the gaps. When the D_{SE50} is not less than the above lower limit, the solid electrolyte reduces the gaps between the active material particles more effectively.

From the same point of view, the ratio of D_{SE50} to D_{AM50}, D_{SE50}/D_{AM50}, is preferably 0.05 or higher, more preferably 0.07 or higher, even more preferably 0.1 or higher, and preferably 0.5 or lower, more preferably 0.4 or lower, even more preferably 0.3 or lower.

With the view of minimizing the gaps between the particles constituting the electrode mixture, the solid electrolyte preferably exhibits at least two peaks in its volume particle size distribution measured by laser diffraction particle size distribution analysis. The peak top of one of the at least two peaks is preferably located within a particle diameter range from 0.2 to 2.0 µm. The peak top of another peak is preferably located within a particle diameter range from 2.0 to 5.0 µm.

In a case where only one peak is exhibited in the volume particle size distribution, the particle diameter at the peak top of the peak is preferably in the range 0.2 to 5.0 µm, with a view to minimizing the gaps between the particles constituting the electrode mixture.

The solid electrolyte used in the invention preferably has a Young's modulus of 30 GPa or less, more preferably 28 GPa or less, even more preferably 25 GPa or less, and preferably 5 GPa or more, more preferably 10 GPa or more, even more preferably 13 GPa or more. When the electrode mixture containing the active material and the solid electrolyte is pressed, the solid electrolyte having Young's modulus in the above range is crushed at the interface with the active material to more effectively fill the gaps between the particles and increase the contact area between the solid electrolyte and the active material.

The Young's modulus of the solid electrolyte can be obtained in the following manner: the force curve of the solid electrolyte is determined using an atomic force microscope (AFM), and the Young's modulus is calculated from the force curve.

The solid electrolyte preferably has a BET specific surface area of 2 m²/g or more, more preferably 3 m²/g or more, even more preferably 4.0 m²/g or more, and preferably 15 m²/g or less, more preferably 14.5 m²/g or less, even more preferably 14 m²/g or less. The solid electrolyte with the BET specific surface area in the above range has a sufficient contact area with the active material and also is prevented from excessive contact with the active material, thereby increasing the electrode density of the electrode mixture.

The solid electrolyte preferably has a larger BET specific surface area than the active material. This increases the proportion of the solid electrolyte that can enter the gaps between the active material particles and ultimately increases the electrode density. From this point of view, the ratio of the BET specific surface area of the solid electrolyte Ss (m²/g) to that of the active material Sa (m²/g), Ss/Sa, is preferably 1 or greater, more preferably 2 or greater, even more preferably 4 or greater, and preferably 150 or smaller, more preferably 100 or smaller, even more preferably 70 or smaller.

The BET specific surface area can be measured by the method described above.

The solid electrolyte preferably has a tap density of 0.1 g/cm³ or more, more preferably 0.2 g/cm³ or more, even more preferably 0.3 g/cm³ or more, and preferably 1.0 g/cm³ or less, more preferably 0.9 g/cm³ or less, even more preferably 0.8 g/cm³ or less. When the tap density of the solid electrolyte is in the above range, a sufficient electrode density for a battery is ensured despite the presence of the solid electrolyte in the electrode mixture.

The method for measuring the tap density is as described above.

The solid electrolyte content of the electrode mixture is preferably 5 mass% or more, more preferably 7 mass% or more, even more preferably 10 mass% or more, and preferably 40 mass% or less, more preferably 35 mass% or less, even more preferably 30 mass% or less.

When the solid electrolyte content is at least 5 mass%, sufficient ionic conductivity is obtained. When the solid electrolyte content is not more than 40 mass%, the proportion of the solid electrolyte that can enter the gaps between the active material particles increases to increase the electrode density.

If desired, the electrode mixture of the invention may contain other materials in addition to the active material and the solid electrolyte, such as conductivity aids and binders. The conductivity aids are not particularly limited as long as they are usable in the electrode mixture, and examples thereof include conductive substances made of carbon materials.

The other materials may be used either individually or as a combination of two or more materials. The total content of the other materials in the electrode mixture is not specifically limited as long as the performance of solid-state batteries are not adversely affected and may range from 0.1 to 10 mass%.

For example, the electrode mixture of the invention may be used as a positive electrode mixture, and in that case, the positive electrode mixture can be applied to a current collector to make a positive electrode layer. The positive electrode layer can be combined with an electrolyte and a negative electrode layer to make a battery cell. When the electrolyte is a solid electrolyte, a solid-state battery cell can be produced by combining the positive electrode layer, a solid electrolyte layer formed of the solid electrolyte, and a negative electrode layer.

Examples of the active material for the negative electrode layer includes carbon, silicon, and lithium.

A solid-state battery cell is produced by pressing a stack composed of a positive electrode layer, a solid electrolyte layer, and a negative electrode layer. As used herein, the term "solid-state" encompasses not only all-solid-state, in which neither liquid nor gel is used as the electrolyte, but also semi-solid-state, in which the electrolyte contains, for example, no more than 50 mass%, 30 mass%, or 10 mass% of liquid or gel materials as the electrolyte.

The battery including the electrode mixture of the invention is preferably a lithium ion battery. The battery including the electrode mixture of the invention can be either primary or secondary and is preferably secondary. The electrode mixture of the invention is particularly suitable for use in lithium ion secondary batteries. The term "lithium ion secondary battery" encompasses a wide range of secondary batteries that charge and discharge by migration of lithium ions between the positive and the negative electrodes.

The invention has been described with reference to its preferred embodiments, but the invention is not limited thereto. For example, while the description in the foregoing embodiments has focused primarily on the electrode mixture suitable for solid-state batteries having lithium ion conductivity, the batteries contemplated by the invention are not limited to Li-ion conductive solid-state batteries.

The following clauses are considered further descriptive of the disclosed invention.
1. An electrode mixture including an active material and a solid electrolyte and exhibiting at least two peaks in a volume particle size distribution measured by laser diffraction particle size distribution analysis.
2. The electrode mixture as set forth in clause 1,
   wherein in the volume particle size distribution,
   at least two peaks are in a particle diameter range from 0.2 to 20 µm, and
   the peak top of a frequency peak at the smallest particle diameter, among
   the at least two peaks, is in a particle diameter range from 0.2 to 5.0 µm,
   and the peak top of a frequency peak at the largest particle diameter, among
   the at least two peaks, is in a particle diameter range from 2.0 to 20 µm.
3. The electrode mixture as set forth in clause 1 or 2, wherein in the volume particle size distribution, the ratio of the height of a frequency peak at the largest particle diameter, peak A, to the height of a frequency peak at the next largest particle diameter after peak A, peak B, is 1.0 to 10.0.
4. The electrode mixture as set forth in any one of clauses 1 to 3, wherein at least one of the active material and the solid electrolyte exhibits at least two peaks in the volume particle size distribution thereof when the active material and the solid electrolyte are individually subjected to laser diffraction particle size distribution analysis.
5. The electrode mixture as set forth in clause 4, wherein the solid electrolyte exhibits at least two peaks in the volume particle size distribution thereof, with the peak top of one of the at least two peaks being in a particle diameter range from 0.1 to 5.0 µm.
6. The electrode mixture as set forth in any one of clauses 1 to 5, wherein the active material contains: lithium; oxygen; and at least one of manganese, nickel, cobalt, iron, sodium, magnesium, aluminum, phosphorus, potassium, calcium, titanium, vanadium, chromium, copper, gallium, yttrium, zirconium, niobium, molybdenum, indium, tantalum, tungsten, rhenium, and cerium.
7. The electrode mixture as set forth in any one of clauses 1 to 6, wherein the solid electrolyte is a sulfide solid electrolyte.
8. The electrode mixture of any one of clauses 1 to 7, wherein the solid electrolyte has a Young's modulus of 30 GPa or less.
9. The electrode mixture as set forth in any one of clauses 1 to 8, wherein the active material has a 50% cumulative volume diameter D_{AM50} of 1.0 to 15 µm in laser diffraction particle size distribution analysis.
10. The electrode mixture as set forth in any one of clauses 1 to 9, wherein the solid electrolyte has a 50% cumulative volume diameter D_{SE50} of 0.1 to 15 µm in laser diffraction particle size distribution analysis.
11. The electrode mixture as set forth in any one of clauses 1 to 10, wherein the active material has a BET specific surface area of 0.1 to 1.5 m²/g.
12. The electrode mixture as set forth in any one of clauses 1 to 11, wherein the solid electrolyte has a BET specific surface area of 2.0 to 15.0 m²/g.
13. The electrode mixture as set forth in any one of clauses 1 to 12, having a BET specific surface area of 0.5 to 5.0 m²/g.
14. The electrode mixture as set forth in any one of clauses 1 to 13, wherein the active material has a tap density of 1.0 to 3.0 g/cm³.
15. The electrode mixture as set forth in any one of clauses 1 to 14, wherein the solid electrolyte has a tap density of 0.1 to 1.0 g/cm³.
16. The electrode mixture as set forth in any one of clauses 1 to 15, further including a conductivity aid.
17. An electrode including a current collector and the electrode mixture as set forth in any one of clauses 1 to 16 applied to the current collector.
18. A battery including the electrode as set forth in clause 17.

### Examples

The invention will now be illustrated in greater detail by way of Examples, but it should be understood that the invention is not construed as being limited thereto.

### Examples 1 to 4 and Comparative Example 1

Layered rock-salt type complex oxides X-1, X-2, and X-3 were used as active materials, and sulfide solid electrolytes Y-1 and Y-2 were used as solid electrolytes. Active materials X-1 to X-3 were lithium oxides containing lithium, oxygen, nickel, manganese, and cobalt. Solid electrolytes Y-1 and Y-2 had a crystal phase of an argyrodite crystal structure.

For each of active materials X-1 to X-3 and solid electrolytes Y-1 and Y-2, the volume particle size distribution was measured by laser diffraction particle size distribution analysis, and from the volume particle size distribution, the diameters at the peak tops, D_{AM50}, and D_{SE50} were calculated. Similarly, the 10% and 90% cumulative volume diameters of the active materials, D_{AM10} and D_{AM90}, and the 10% and 90% cumulative volume diameters of the solid electrolytes, D_{SE10} and D_{SE90}, were calculated from the respective volume particle size distributions measured by laser diffraction particle size distribution analysis. The BET specific surface area, tap density, and Young's modulus were also measured by the methods described above. The measurement results are shown in Table 1.

Each of active materials X-1 and X-2 and solid electrolytes Y-1 and Y-2 exhibited only one peak in their volume particle size distributions. Active material X-3 exhibited two peaks in its volume particle size distribution.

**Table 1**

| | | Active Material | | | Solid Electrolyte | |
|---|---|---|---|---|---|---|
| | | X-1 | X-2 | X-3 | Y-1 | Y-2 |
| Diameter at Peak Top (µm) | | 5.1 | 8.9 | 2.5 | 0.7 | 3.1 |
| | | - | - | 9.3 | - | - |
| Cumulative Volume Diameter (µm) | D_{AM10} | 3.1 | 6.8 | 2.3 | - | - |
| | D_{AM50} | 5.1 | 8.9 | 7.5 | - | - |
| | D_{AM90} | 8.2 | 12.0 | 16.8 | - | - |
| | D_{SE10} | - | - | - | 0.4 | 1.1 |
| | D_{SE50} | - | - | - | 0.7 | 3.1 |
| | D_{SE90} | - | - | - | 1.3 | 6.8 |
| BET Specific Surface Area (m2/g) | Sa | 0.7 | 0.2 | 0.4 | - | - |
| | Ss | - | - | - | 13.5 | 5.7 |
| Tap Density (g/cm³) | | 2.2 | 2.4 | 2.5 | 0.5 | 0.6 |
| Young's Modulus (GPa) | | - | - | - | 19 | 18 |

The active material powder, the solid electrolyte powder, a conductivity aid powder (VGCF^{®}), and a binder were weighed out in a mass ratio of 85:10:2:3 and mixed in a mortar to prepare an electrode mixture. The active material and the solid electrolyte used here were as shown in Table 2. The electrode mixture was subjected to laser diffraction particle size distribution analysis to obtain its volume particle size distribution, from which D_{EM50} was calculated. Similarly, the 10% and 90% cumulative volume diameters of the electrode mixture, D_{EM10} and D_{EM90}, were calculated. The particle diameter at the peak top of the peak with the largest particle diameter (peak A) and that of the peak with the next largest particle diameter after the peak A (peak B), i.e., D_{A} and D_{B}, were read out. The ratio of the height of the peak A to that of the peak B was also calculated. These results are shown in Table 2. The volume particle size distribution of the electrode mixture of Example 1 is shown in Fig. 1.

In every Example, the volume particle size distribution of the electrode mixture had two peaks, i.e., the peaks A and B, while only one peak was found in the volume particle size distribution of Comparative Example 1.

The BET specific surface area of each of the electrode mixtures of Examples and Comparative Example was measured by the method described above. The results are shown in Table 2.

The electrode density of each of the electrode mixtures of Examples and Comparative Example was determined in the following manner. The active material powder, the solid electrolyte powder, a conductivity aid powder (VGCF^{®}), and a binder were weighed out in a mass ratio of 85:10:2:3 and mixed together with an appropriate amount of a tetralin/anisole mixed solvent using a planetary centrifugal mixer AWATORI RENTARO^{®} to prepare an electrode mixture. The active material and the solid electrolyte used here were as shown in Table 2. The electrode mixture was applied to a stainless steel foil as a current collector by doctor blading and dried in vacuo at 120°C for 6 hours to make an electrode. The electrode (without pressing) was cut to 106 mm by 61 mm using a cutting die. The thickness of the cut out electrode was measured with a micrometer, and the thickness of the current collector was subtracted therefrom to give the thickness T (cm) of the electrode mixture. The mass of the electrode was measured, and the mass of the current collector was subtracted therefrom to give the mass M (g) of the electrode mixture. From the measurements, the electrode density d (g/cm³) of the electrode mixture was calculated according to formula: d = M/(10.6 × 6.1 × T). The results obtained are shown in Table 2.

**Table 2**

| | | | Example | | | | Comp. Ex. 1 |
|---|---|---|---|---|---|---|---|
| | | | 1 | 2 | 3 | 4 | |
| Active Material | | | X-1 | X-2 | X-3 | X-3 | X-1 |
| Solid Electrolyte | | | Y-1 | Y-2 | Y-1 | Y-2 | Y-2 |
| Electrode Mixture | Cumulative Volume Diameter (µm) | D_{EM10} | 1.0 | 2.4 | 1.6 | 1.7 | 2.6 |
| | | D_{EM50} | 4.6 | 10.4 | 7.9 | 4.4 | 4.4 |
| | | D_{EM90} | 8.5 | 27.1 | 23.0 | 15.2 | 7.4 |
| | Particle diameter at Peak Top of Peak A, D_{A} (µm) | | 5.0 | 11.0 | 11.0 | 9.3 | 4.6 |
| | Particle diameter at Peak Top of Peak B, D_{B} (µm) | | 1.1 | 2.5 | 3.0 | 2.8 | - |
| | Height of Peak A / Height of Peak B | | 6.3 | 4.3 | 3.7 | 3.3 | - |
| | BET Specific Surface Area (m²/g) | | 2.0 | 1.0 | 1.8 | 1.1 | 1.2 |
| | Electrode Density (g/cm³) | | 2.2 | 2.5 | 2.7 | 2.6 | 1.9 |

As shown in Table 2, the electrode mixtures of Examples, which each exhibit two peaks in their volume particle size distributions measured by laser diffraction particle size distribution analysis, have higher electrode densities than the electrode mixture of Comparative Example 1, which exhibits only one peak in its volume particle size distribution. This proves that the gaps between the particles constituting the electrode mixture have been reduced in Examples.

### Industrial Applicability

The invention provides an electrode mixture having a high electrode density.

## Claims

1. An electrode mixture comprising an active material and a solid electrolyte and exhibiting at least two peaks in a volume particle size distribution measured by laser diffraction particle size distribution analysis.

2. The electrode mixture according to claim 1,
wherein in the volume particle size distribution,
at least two peaks are in a particle diameter range from 0.2 to 20 µm, and
the peak top of a frequency peak at the smallest particle diameter, among the at least two peaks, is in a particle diameter range from 0.2 to 5.0 µm, and the peak top of a frequency peak at the largest particle diameter, among the at least two peaks, is in a particle diameter range from 2.0 to 20 µm.

3. The electrode mixture according to claim 1, wherein in the volume particle size distribution, a ratio of the height of a frequency peak at the largest particle diameter, peak A, to the height of a frequency peak at the next largest particle diameter after the peak A, peak B, is 1.0 to 10.0.

4. The electrode mixture according to claim 1, wherein at least one of the active material and the solid electrolyte exhibits at least two peaks in the volume particle size distribution thereof when the active material and the solid electrolyte are individually subjected to laser diffraction particle size distribution analysis.

5. The electrode mixture according to claim 4, wherein the solid electrolyte exhibits at least two peaks in the volume particle size distribution thereof, with the peak top of one of the at least two peaks being in a particle diameter range from 0.1 to 5.0 µm.

6. The electrode mixture according to claim 1, wherein the active material comprises: lithium; oxygen; and at least one of manganese, nickel, cobalt, iron, sodium, magnesium, aluminum, phosphorus, potassium, calcium, titanium, vanadium, chromium, copper, gallium, yttrium, zirconium, niobium, molybdenum, indium, tantalum, tungsten, rhenium, and cerium.

7. The electrode mixture according to claim 1, wherein the solid electrolyte is a sulfide solid electrolyte.

8. The electrode mixture according to claim 1, wherein the solid electrolyte has a Young's modulus of 30 GPa or less.

9. The electrode mixture according to claim 1, wherein the active material has a 50% cumulative volume diameter D_{AM50} of 1.0 to 15 µm in laser diffraction particle size distribution analysis.

10. The electrode mixture according to claim 1, wherein the solid electrolyte has a 50% cumulative volume diameter D_{SE50} of 0.1 to 15 µm in laser diffraction particle size distribution analysis.

11. The electrode mixture according to claim 1, wherein the active material has a BET specific surface area of 0.1 to 1.5 m²/g.

12. The electrode mixture according to claim 1, wherein the solid electrolyte has a BET specific surface area of 2.0 to 15.0 m²/g.

13. The electrode mixture according to claim 1, having a BET specific surface area of 0.5 to 5.0 m²/g.

14. The electrode mixture according to claim 1, wherein the active material has a tap density of 1.0 to 3.0 g/cm³.

15. The electrode mixture according to claim 1, wherein the solid electrolyte has a tap density of 0.1 to 1.0 g/cm³.

16. The electrode mixture according to claim 1, further comprising a conductivity aid.

17. An electrode comprising a current collector and the electrode mixture according to claim 1 applied to the current collector.

18. A battery comprising the electrode according to claim 17.
